# FASCICULE DE BREVET EUROPEEN

(11) **EP 1 395 769 B1**
(45) Date de publication et mention de la délivrance du brevet: **20.10.2004**
(21) Numéro de dépôt: 02738216.7
(22) Date de dépôt: 06.05.2002
(51) Int. Cl.: F16L 11/16

(54) **CONDUITE FLEXIBLE A VOUTE DE PRESSION AGRAFEE PAR LE BAS**
FLEXIBLE ROHRLEITUNG MIT VON UNTEN GEKLAMMERTEM DRUCKGEWÖLBE
FLEXIBLE CONDUIT WITH PRESSURE VAULT INTERLOCKED FROM BELOW

(30) Priorité: 18.05.2001 FR 0106558
(43) Date de publication de la demande: 10.03.2004
(73) Titulaire: Technip France, 92400 Courbevoie (FR)
(72) Inventeur: COUTAREL, Alain, F-76130 Mont-Saint-Aignan (FR); DUPOIRON, François, F-76360 Barentin (FR); ESPINASSE, Philippe, F-76420 Bihorel (FR); JUNG, Patrice, Joel, Louis, F-76940 La Mailleraye sur Seine (FR)
(74) Mandataire: Bertrand, Didier
(86) Numéro de dépôt international: PCT/FR2002/001551
(87) Numéro de publication internationale: WO 2002/095280

(56) Documents cités:
- WO-A-00/36324
- FR-A- 2 650 652
- FR-A- 2 782 142
- US-A- 5 813 439

## Description

La présente invention concerne une conduite flexible pour véhiculer sur de grandes distances un fluide sous pression et le cas échéant sous haute température, tel qu'un gaz, du pétrole, de l'eau ou d'autres fluides. L'invention vise tout particulièrement une conduite destinée à une exploitation pétrolière en mer. On sait qu'il existe d'une part les conduites de fond, dites "flow-lines", c'est-à-dire des conduites flexibles déroulées à partir d'un bateau pour être posées généralement sur le fond de la mer et connectées aux installations sous-marines, de telles conduites travaillant principalement en statique, et d'autre part, les colonnes montantes, dites "risers", c'est-à-dire des conduites flexibles déroulées à partir d'une installation de surface telle qu'une plate-forme et qui sont connectées aux installations sous-marines et dont la majeure partie ne repose pas sous le fond marin, de telles conduites travaillant essentiellement en dynarnique. L'invention vise plus particulièrement les conduites travaillant en dynamique.

Les conduites flexibles utilisées en mer doivent pouvoir résister à des pressions internes et/ ou à des pressions externes fortes et supporter également des flexions longitudinales ou des torsions sans risque de rupture.

Elles présentent des configurations variées en fonction de leur utilisation précise mais répondent en général aux critères constructifs définis notamment dans les recommandations API 17 B et API 17 J établies par l'American Petroleum Institute sous l'intitulé "Recommended Practice for Flexible Pipe".

Une conduite flexible comprend généralement de l'intérieur vers l'extérieur :
- une gaine d'étanchéité interne réalisée en matière plastique, généralement polymère, résistant plus ou moins à l'action chimique du fluide à transporter ;
- une voûte de pression résistant principalement à la pression développée par le fluide dans la gaine d'étanchéité et constituée par l'enroulement en hélice à pas court, autour de la gaine interne, d'un ou plusieurs fils métalliques de forme agrafés (auto-agrafables ou non);
- au moins une nappe (et généralement au moins deux nappes croisées) d'armures de traction dont l'angle d'armage mesuré sur l'axe longitudinal de la conduite est inférieur à 55° ; et
- une gaine de protection et d'étanchéité externe en polymère.

Une telle structure est celle d'une conduite à passage lisse, dite "smooth bore". Dans une conduite à passage non-lisse, dite "rough bore", on prévoit en outre à l'intérieur de la gaine d'étanchéité interne une carcasse constituée d'un feuillard agrafé qui sert à empêcher l'écrasement (en anglais "collapse") de la conduite sous pression externe.

La voûte de pression est constituée par un enroulement à spires non jointives pour doter la conduite d'une certaine flexibilité. Par spires non jointives, on entend des spires entre lesquelles est ménagé un certain espace ou interstice, dénommé par la suite "déjoint", et qui peut être d'autant plus grand que le fil de forme enroulé est gros.

Il existe deux types de voûtes de pression :
. les voûtes de pression pour des applications statiques,
. les voûtes de pression pour des applications dynamiques.

Pour les applications statiques, les voûtes de pression n'ont qu'à reprendre les pressions interne et externe. Elles ne sont pas soumises à la fatigue engendrée par les frottements dus à des sollicitations dynamiques. Dans ce cas, on peut utiliser des fils de voûte avec n'importe quel type d'agrafage. On sélectionne le fil (section et inertie) en fonction des pressions interne et externe.

Pour les applications dynamiques telles que principalement visées par l'invention, les voûtes de pression doivent reprendre en plus des pressions interne et externe, des contraintes importantes dues aux sollicitations dynamiques. Ces contraintes sont dues à des contacts entre les fils constituant la voûte. Ces contacts engendrent des frottements qui, liés à des pressions d'appuis importantes, entraînent une réduction de la durée de vie par fissuration en fatigue des profilés.

On rencontre ce problème par exemple dans la conduite connue par US 4 549 581 qui montre l'agrafage de fils en U par le bas, par des agrafes en U. Ces agrafes sont trop faibles pour résister aux sollicitations dynamiques. En fait, une telle agrafe ne reprend en elle-même que peu de contraintes ; elle fléchit et s'appuie sur le profil du fil de forme. Il en résulte des moments de flexion et donc des contraintes alternées, plus ou moins importantes en fonction de la position et donc du niveau de dynamisme. Dans ce cas, la tenue en conditions dynamiques est fonction de la position initiale du profil par rapport à l'agrafe, et du niveau de dynamisme, donc de l'amplitude des vagues. On doit ajuster les sections et les caractéristiques de la matière en fonction des niveaux de sévérité. Ce type d'agrafage limite considérablement la performance de la voûte de pression dans les applications dynamiques.

C'est pourquoi la Demanderesse a déjà proposé dans le document FR 2 727 738 de remonter la zone d'agrafe dans la partie supérieure de la voûte de pression. L'agrafage étant réalisé par le haut, l'agrafe est peu soumise à la pression interne (reprise par le fil de forme, ici en "têta") et aux amplitudes du déplacement dû aux sollicitations dynamiques.

Selon le document EP 0 431 142, concernant aussi une voûte de pression à fil de forme en "têta", l'agrafage se fait sensiblement au niveau de la fibre neutre.

Dans le brevet US 5 730 188, on a proposé pour améliorer la résistance à la fatigue en dynamique des fils en "zêta" de remonter la zone d'agrafage dans la partie supérieure de la voûte et de faire un chanfrein sur l'aile supérieure du fil. Ce fil de forme permet de limiter les contacts au niveau de la zone d'agrafage et augmente ainsi la résistance à la fatigue de la voûte de pression.

La Demanderesse a aussi proposé dans le document FR 2 783 142 d'utiliser un fil de forme allégé de forte inertie, en forme de I, qui, pour les applications dynamiques est également agrafé par le haut.

On voit donc que pour les applications dynamiques, un consensus s'est établi pour utiliser exclusivement l'agrafage du fil de forme par le haut.

Pour les applications en grande profondeur, on cherche à avoir de l'inertie au niveau de la voûte de pression dé manière à reprendre aussi la pression externe. Dans ce cas, le fil de forme constituant la voûte a une hauteur relativement importante qui, dans une application dynamique avec agrafage par le haut, entraîne la création d'un déjoint important. La gaine interne peut fluer dans ce volume important sous l'effet de la température et de la pression interne, ce qui entraîne soit une détérioration de la gaine soit le dégrafage de la voûte de pression. On peut palier ce problème en prévoyant une surépaisseur de la gaine de pression, mais cela renchérit le coût de cette gaine.

C'est pourquoi la Demanderesse a également proposé, dans le document FR 2 782 141, des dispositifs anti-fluage pour masquer ces déjoints. Cependant, l'utilisation de ces dispositifs enchérit le coût de la fabrication de ces voûtes de pression.

Le but de l'invention est de proposer une conduite dont la voûte de pression est adaptée pour bien résister aux sollicitations dynamiques en grande profondeur, sans présenter les inconvénients des conduites connues.

La présente invention atteint son but grâce à une conduite tubulaire flexible de type "rough bore" ou "smooth bore", c'est-à-dire comprenant au moins, de l'intérieur vers l'extérieur, une gaine d'étanchéité interne en matière polymère, une voûte de pression cylindrique présentant une face externe et une face interne disposée au-dessus de la gaine interne, la voûte étant constituée par l'enroulement en hélice à pas court et avec déjoint entre spires d'un fil métallique de forme agrafé par le bas par un fil d'agrafe, au moins une nappe d'armures de traction enroulées à pas long et une gaine de protection et d'étanchéité externe en polymère, caractérisée en ce que le fil d'agrafe a sensiblement la même hauteur que le fil de forme et s'agrafe, sans contact radial nominal, au-dessous de la fibre neutre du fil (c'est-à-dire la fibre où il n'y a pas d'allongement lors du spiralage, au niveau du barycentre de la section du fil). Par absence de contact radial nominal, on entend que le fil de forme et le fil d'agrafe sont conformés avec un jeu. radial nominal au niveau de leurs zones d'agrafage. En pratique, la zone d'agrafage, définie par le le plan moyen de l'agrafage, est localisée au niveau du 1/3 inférieur de la hauteur du fil de forme et du fil d'agrafe, ou plus bas. Cet agrafage par le bas permet d'éviter le problème de fluage de la gaine interne. La hauteur et la section du fil d'agrafe concourt à l'absence de contact radial entre le fil d'agrafe et le fil de forme ; de ce fait, le fil d'agrafe absorbe et transmet les contraintes de pressions vers l'extérieur de la voûte. Le fil d'agrafe est dimensionné de manière à permettre la reprise des contraintes dues à la pression interne sans la contribution du fil de forme ; ainsi, il n'y a pas de transmission importante des contraintes au niveau des tétons d'agrafage. Il est avantageux que la section du fil d'agrafe soit proche de la section du fil de forme. De manière pratique, le rapport des sections du fil de forme au fil d'agrafe est compris entre 1 et 2 (et de préférence entre 1 et 1,6) alors que, dans l'art antérieur, ce rapport est plus grand que 2 et le plus couramment supérieur à 4 ou 5. De même, le rapport des inerties Iyy du fil de forme au fil d'agrafe est avantageusement compris entre 1 et 2, ce qui permet de ne pas trop diminuer l'inertie moyenne de la voûte de pression par rapport à celle du fil de forme seul. De manière avantageuse, la hauteur du fil d'agrafe est la même ou sensiblement la même que la hauteur du fil de forme, ce qui permet d'avoir un diamètre externe constant et une meilleure répartition des contraintes.

Avantageusement, pour une conduite utilisée comme colonne montante ("riser"), une frette de faible épaisseur est enroulée au-dessus de la voûte de pression, en tête de la colonne.

L'invention est applicable à plusieurs sortes de sections de fil, Avantageusement cependant, le fil de forme de la voûte de pression est à section allégée, en I, et en particulier sous la forme dérivée en "psi" ψ. Le fil d'agrafe est avantageusement à section en T.

L'invention sera bien comprise à l'aide de la description qui suit, en référence aux dessins schématiques annexés représentant à titre d'exemple des formes de réalisation de la conduite flexible selon l'invention. D'autres avantages et caractéristiques seront mis en évidence à la lecture de la description.
La figure 1 est une vue en perspective schématique montrant les couches successives d'une conduite (ici de type "smooth bore") à laquelle s'applique l'invention.
La figure 2 est une vue partielle en coupe longitudinale de la voûte de pression d'une conduite flexible conforme à l'invention, avec un fil de forme en "psi".
Les figures 3 et 4 illustrent deux variantes de voûtes de pression conformes à l'invention,
Les figures 5 à 8 illustrent des voûtes de pression connues de l'art antérieur.

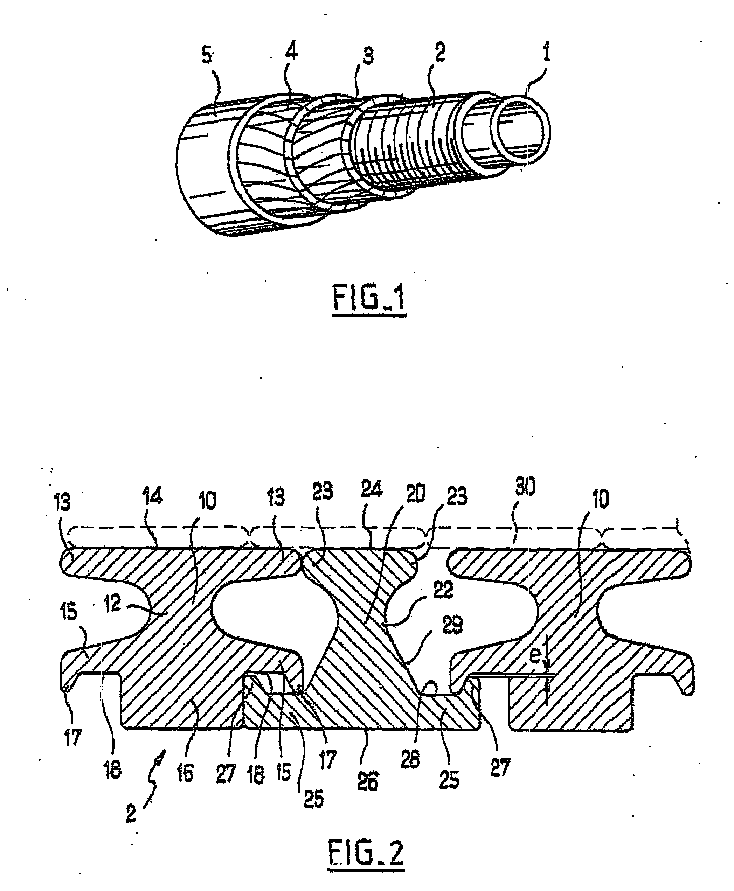

Comme le montre la figure 1, et de manière générale, une conduite de type "smooth bore" comprend de l'intérieur vers l'extérieur une gaine d'étanchéité interne polymérique 1, une voûte métallique 2 constituée par l'enroulement en hélice d'au moins un fil métallique de forme agrafé, une armure résistant à la traction axiale dans le sens longitudinal de la conduite et habituellement constituée d'une ou plusieurs paires de nappes croisées 3, 4 d'enroulement en sens contraire, et d'une gaine d'étanchéité externe polymérique 5. D'autres couches non représentées peuvent être prévues, selon le type et la destination de la conduite, comme par exemple une carcasse interne sous la gaine interne d'étanchéité 1 (conduite "rough bore"), une couche de frette constituée par un enroulement à pas court de fil rectangulaire interposée entre la voûte de pression 2 et la première nappe d'armure 3, et des gaines intermédiaires disposées entre diverses nappes d'armures.

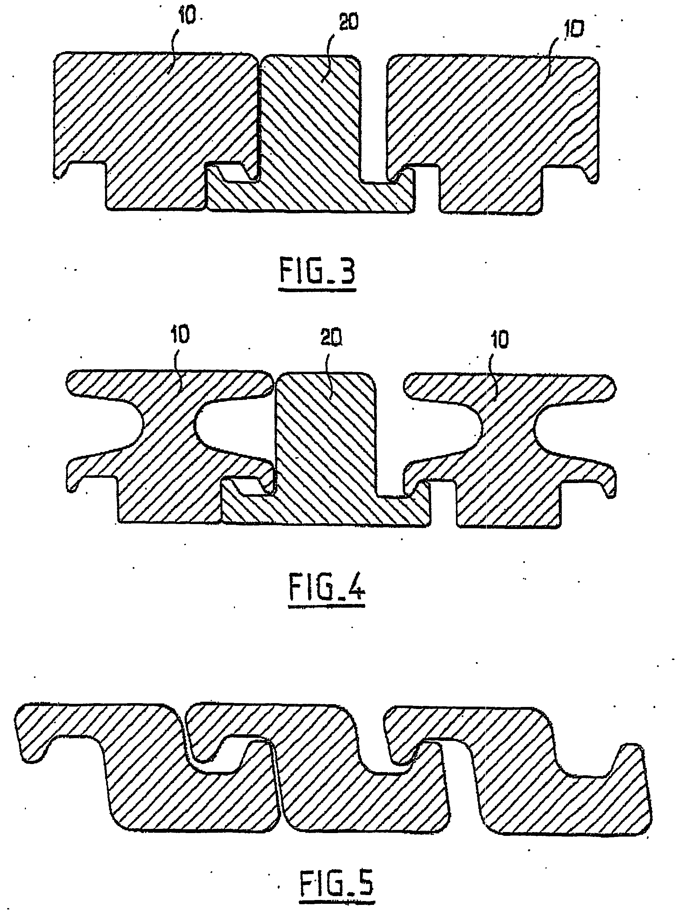

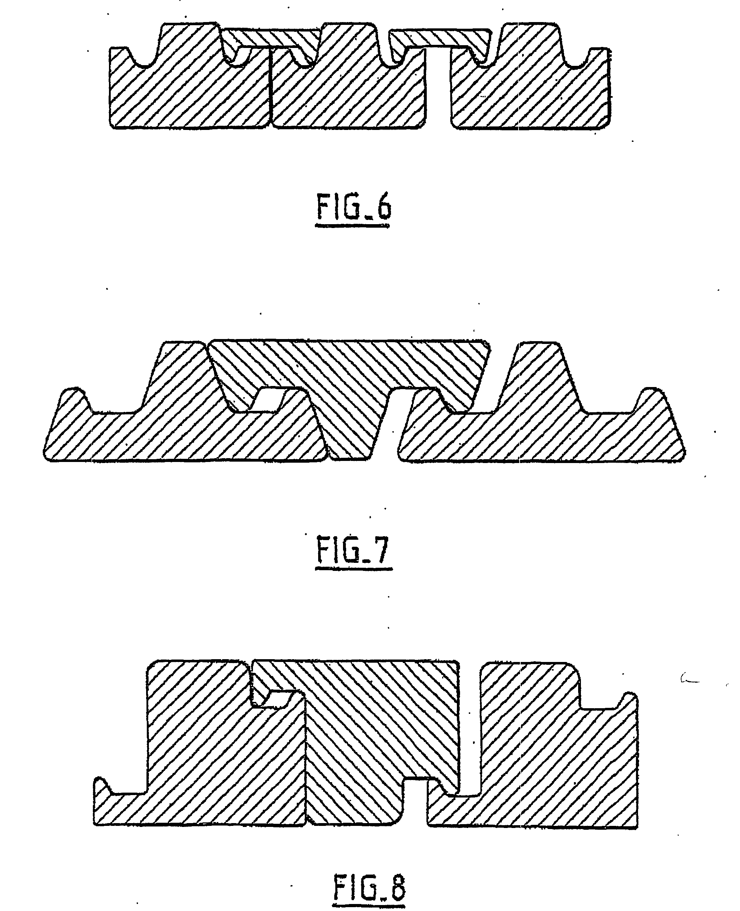

On a représenté aux figures 5 à 8 des voûtes de pression connues de l'art antérieur. La figure 5 montre un profil en "zêta" dissymétrique avec auto-agrafage par le haut, la figure 6 montre un profil en "têta" agrafé par un U par le haut, la figure 7 montre un profil en T autoagrafé, et la figure 8 un profil dont les zones d'agrafage sont dissymétriques. Le problème de toutes ces voûtes de pression est le fluage dans les déjoints. C'est ce problème que résout l'invention représentée aux figures 2 à 4.

Comme lé montre la figure 2, la voûte de pression 2 est constituée par un enroulement d'un fil de forme en "psi" 10 agrafé par un fil d'agrafe 20. Le fil d'agrafe 20 a ici sensiblement la même hauteur que le profil 10 et l'un et l'autre sont conformés de manière à éviter tout contact radial entre le fil d'agrafe et le fil de forme en situation normale, et ce, afin d'éviter la fissuration au niveau des tétons d'agrafage.

Le profil 10 est un profil en "psi" à l'envers, comportant, une âme 12, des ailes externes (c'est-à-dire tournées du côté de l'extérieur de la conduite) relativement larges 13 formant une base droite 14 (une base droite en coupe, correspondant donc à une surface courbe cylindrique), des ailes internes 15 séparées par un patin central 16. Les ailes internes 15 sont terminées par un rebord ou téton d'agrafage 17 tourné vers l'intérieur de la conduite et séparé du patin central 16 par une zone droite de fond d'aile 18.

Le fil d'agrafe 20 a un profil constitué aussi d'une âme 22, d'ailes externes relativement courtes 23 formant une base droite 24, et d'ailes internes 25 formant une base droite 26. Les ailes internes 25 sont terminées par un rebord ou téton d'agrafage 27 tourné vers l'extérieur de la conduite et séparé d'une partie inclinée de raccordement 29 avec l'âme 22 par une zone droite de fond d'aile 28.

La largeur des fonds d'aile 18, 28 est sensiblement égale et perrnet un débattement de position entre le profil 10 et le fil d'agrafe 20, entre une position accolée (entre le profil gauche 10 de la figure 1 et l'agrafe 20) et une position écartée (entre le profil droit 10 de la figure 1 et l'agrafe 20).

La hauteur du patin central 16 par rapport au fond d'aile 18 définit la limite haute de la zone d'agrafage et est inférieure ou égale au tiers de la hauteur du profil (par exemple ici, 6,4 mm pour une hauteur de profil de 21 mm).

La différence de hauteur entre le patin central 16 et le téton d'agrafage 27 laisse un jeu "e" évitant le contact et l'usure par frottement. Si, par suite des variations dimensionnelles liées aux tolérances, aux déformations, à la pose, etc., il apparaît initialement des contacts, ceux-ci disparaissent par usure. Même en cas de contacts, le fil d'agrafe ne travaille pratiquement pas en flexion, du fait de son dimensionnement, et les contraintes alternées sont engendrées uniquement par le frottement, c'est-à-dire par des applications de pression très ponctuelles. Les contraintes sont donc toujours de même niveau (à pression et coefficient de frottement constant) quel que soit le niveau de dynamisme, ce qui est complètement différent par rapport aux solutions de l'art antérieur. Par conséquent la tenue en fatigue de l'agrafe sera nettement moins sensible à la position initiale du profil (contact) et aux variations de sollicitations dynamiques.

La largeur de la base 14 extérieure du fil de forme (par exemple 28,6 mm) est sensiblement égale à la largeur de la base intérieure 26 du fil d'agrafe (par exemple 29 mm), et la largeur du patin intérieur 16 (par exemple 14 mm) est sensiblement égale à la largeur de la base extérieure 24 de l'agrafe (par exemple 14,2 mm), de manière à équilibrer les pressions interne et externe.

Dans le mode de réalisation représenté, l'inertie Ixx et l'inertie Iyy du fil de forme sont respectivement 14536 mm⁴ et 15165 mm⁴, et celles du fil d'agrafe sont respectivement 13035 mm⁴ et 11319 mm⁴. Les aires respectives d'une section du profil et du fil d'agrafe sont 356,3 mm² et 289,3 mm². On voit que dans cet exemple, les rapports des inerties Iyy ou des aires d'une section du fil de forme par rapport à celles du fil d'agrafe sont voisines de 1.

Les figures 3 et 4 montrent deux variantes de réalisation d'une voûte de pression conforme à l'invention.

Selon la figure 3, le profil 10 est un profil en "têta" coopérant avec un fil d'agrafe en T (sans évidements) agrafé par le bas, en dessous du tiers de la hauteur de la voûte. L'aire et l'inertie Iyy du profil 10 sont ici sensiblement plus grandes que celles du fil d'agrafe 20, dans un rapport toutefois inférieur à 2.

Selon la figure 4, on a "allégé" le fil de forme 10 pour lui donner une forme en "psi" de sorte que son inertie se rapproche de celle du fil d'agrafe 20, identique à celui de la figure 3.

En tête de colonne montante ("riser"), la pression interne est très supérieure à la pression externe. La voûte de pression doit absorber des contraintes importantes qui, associées aux sollicitations dynamiques, peuvent entraîner des problèmes de fatigue dans cette région de la colonne. Pour pallier ce problème, une première solution est de donner de la section au fil de forme et au fil d'agrafe, comme proposé dans les figures 3 et 4. Une autre solution est d'enrouler au-dessus de la voûte de pression une frette 30 de très faible épaisseur par rapport à la voûte, comme représenté en tirets sur la figure 2. L'épaisseur est de l'ordre de 5 mm. Cette couche de frette 30 peut n'être introduite qu'en tête de colonne montante (là où c'est nécessaire) et être remplacée ailleurs par un bourrage plastique ou n'être pas remplacée du tout. Un autre avantage de cette solution est que la frette peut être utilisée pour limiter le fluage d'une éventuelle gaine anti-écrasement au-dessus de la voûte de pression.

## Revendications

1. Conduite tubulaire flexible comprenant au moins, de l'intérieur vers l'extérieur, une gaine d'étanchéité interne (1) en matière polymère, une voûte de pression cylindrique (2) présentant une face externe et une face interne disposée au-dessus de la gaine interne (1), la voûte (2) étant constituée par l'enroulement en hélice à pas court et avec déjoint entre spires d'un fil métallique de forme (10) agrafé par le bas à l'aide d'un fil d'agrafe (20), au moins une nappe (3, 4) d'armures de traction enroulées à pas long et une gaine (5) de protection et d'étanchéité externe en polymère; **caractérisée en ce que** le fil d'agrafe (20) a sensiblement la même hauteur que le fil de forme (10) et s'agrafe, sans contact radial nominal, au niveau ou en dessous du tiers de la hauteur du fil de forme (10), le rapport des sections du fil de forme (10) au fil d'agrafe (20) étant compris entre 1 et 2.

2. Conduite selon la revendication 1, **caractérisée en ce que** le rapport des sections du fil de forme (10) et du fil d'agrafe (20) est de préférence inférieur à 1,6.

3. Conduite selon l'une quelconque des revendications 1 ou 2, **caractérisée en ce que** le rapport des inerties Iyy du fil de forme (10) au fil d'agrafe (20) est compris entre 1 et 2.

4. Conduite selon l'une quelconque des revendications 1 à 3, **caractérisée en ce qu'**une frette (30) de faible épaisseur est enroulée au-dessus de la voûte de pression.

5. Conduite selon l'une quelconque des revendications 1 à 4, **caractérisée en ce que** le fil de forme (10) est en forme de "psi".

## Patentansprüche

1. Flexible Rohrleitung mit mindestens, von innen nach außen, einem inneren Dichtungsmantel (1) aus Kunststoff, einem zylindrischen Druckgewölbe (2), das eine äußere Oberfläche und eine über dem inneren Mantel (1) angeordnete innere Oberfläche aufweist, wobei das Gewölbe (2) einen Metallformdraht (10) aufweist, der in Spiralen kleiner Ganghöhe und mit einem Abstand zwischen den Spiralen gewickelt ist und mit Hilfe eines Klammerdrahts (20) von unten geklammert ist, mindestens einer Schicht (3,4) aus Zugarmierungen, die mit großer Ganghöhe gewickelt sind, und einem äußeren Schutz- und Dichtungsmantel (5) aus Kunststoff;
**dadurch gekennzeichnet, daß**
der Klammerdraht (20) im wesentlichen die gleiche Höhe hat wie der Formdraht (10) und sich ohne nominalen radialen Kontakt in Höhe oder unterhalb des Drittels der Höhe des Formdrahts (10) klammert, wobei das Verhältnis der Querschnitte des Formdrahts (10) und des Klammerdrahts (20) zwischen 1 und 2 ist.

2. Leitung nach Anspruch 1, **dadurch gekennzeichnet, daß** das Verhältnis der Querschnitte des Formdrahts (10) und des Klammerdrahts (20) vorzugsweise kleiner als 1,6 ist.

3. Leitung nach einem der Ansprüche 1 oder 2, **dadurch gekennzeichnet, daß** das Verhältnis der Trägheit Iyy des Formdrahts (10) zu der des Klammerdrahts (20) zwischen 1 und 2 ist.

4. Leitung nach einem der Ansprüche 1 bis 3, **dadurch gekennzeichnet, daß** eine Ringarmierung (30) geringer Dicke über das Druckgewölbe gewickelt ist.

5. Leitung nach einem der Ansprüche 1 bis 4, **dadurch gekennzeichnet, daß** der Formdraht (10) in Form eines "psi" ist.

## Claims

1. Flexible tubular pipe comprising at least, from the inside outwards, an internal sealing sheath (1) made of a polymer material, a cylindrical pressure vault (2) having an external face and an internal face placed over the internal sheath (1), the vault (2) consisting of the winding, in a helix with a short pitch and with a gap between turns, of a metal profile wire (10) interlocked from below by a fastener wire (20), at least one ply (3, 4) of tensile armour layers wound with a long pitch and an external protective sealing sheath (5) made of a polymer, **characterized in that** the fastener wire (20) has substantially the same height as the profile wire (10) and is interlocked, with no nominal radial contact, at or below one third of the height of the profile wire (10), the ratio of the cross section of the profile wire (10) to the cross section of the fastener wire (20) being between 1 and 2.

2. Pipe according to Claim 1, **characterized in that** the ratio of the cross section of the profile wire (10) to the cross section of the fastener wire (20) is preferably less than 1.6.

3. Pipe according to either of Claims 1 and 2, **characterized in that** the ratio of the moment of inertia I_{yy} of the profile wire (10) to the moment of inertial I_{yy} of the fastener wire (20) is between 1 and 2.

4. Pipe according to any one of Claims 1 to 3, **characterized in that** a thin hoop reinforcement (30) is wound on top of the pressure vault.

5. Pipe according to any one of Claims 1 to 4, **characterized in that** the profile wire (10) is "psi" shaped.
